# EUROPEAN PATENT APPLICATION

(11) **EP 4 845 142 A1**
(43) Date of publication of application: **25.11.2026**
(21) Application number: 26177677.7
(22) Date of filing: 08.05.2026
(51) Int. Cl.: H04N 7/14, H04N 7/15

(54) **CONTEXT-ENHANCED SUMMARIZATION FOR MEETING TRANSCRIPTION**

(30) Priority: 21.05.2025 US 202519215118
(71) Applicant: Microsoft Technology Licensing, LLC, Redmond, WA 98052 (US)
(72) Inventor: RAD, Mahdi, Redmond, 98052 (US); POLLEFEYS, Marc Andre Leon, Redmond, 98052 (US); GALCERAN, Enric, Redmond, 98052 (US)
(74) Representative: CMS Cameron McKenna Nabarro Olswang LLP

(57) **Abstract**

Implementations for context-enhanced meeting transcription processes are provided. One example includes a computing system comprising: processing circuitry and memory storing instructions that, during execution, cause the processing circuitry to: receive video data and audio data of a video conference; generate a transcript for the video conference using the audio data; retrieve a list of invitees for the video conference and one or more profile images corresponding to a subset of the list of invitees; generate a list of attendees using the video data and the audio data; perform a matching that matches each of the attendees to a respective invitee of the list of invitees based at least on: the video data; the audio data; and the one or more profile images; and label the transcript based on the matching.

## Description

### BACKGROUND

Video conferencing is a communication method that enables participants to hold live meetings from different geographical locations using audio and video transmissions. Video conferencing applications can be implemented in various ways. In some cases, the video conference uses peer-to-peer connections to transmit video and audio. This can be particularly beneficial for one-on-one meetings to reduce latency. For larger meetings, it is more common to rely on a central hosting server, such as a cloud-based system, to distribute video and audio among participants.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

Implementations for context-enhanced meeting transcription processes are provided. One example includes a computing system comprising: processing circuitry and memory storing instructions that, during execution, cause the processing circuitry to: receive video data and audio data of a video conference; generate a transcript for the video conference using the audio data; retrieve a list of invitees for the video conference and one or more profile images corresponding to a subset of the list of invitees; generate a list of attendees using the video data and the audio data; perform a matching that matches each of the attendees to a respective invitee of the list of invitees based at least on: the video data; the audio data; and the one or more profile images; and label the transcript based on the matching.

### BRIEF DESCRIPTION OF THE DRAWINGS

FIG. 1 shows a schematic view of an example system for conducting video conferences across multiple computing systems.
FIG. 2 shows a schematic view of an example user computing system and an example server system for context-enhanced meeting transcription, both of which can be implemented in the example system of FIG. 1.
FIG. 3 shows a data flow diagram of an example method for context-enhanced meeting transcription by matching attendees to invitees, which can be implemented using the example systems of FIG. 2.
FIG. 4 shows a data flow diagram of an example method for extracting features and contextual information for context-enhanced meeting transcription, which can be implemented using the example systems of FIG. 2.
FIG. 5 shows a process flow diagram of an example method for context-enhanced meeting transcription, which can be implemented using the example systems of FIG. 2.
FIG. 6 shows a schematic view of an example computing environment in which the computer systems of FIGS. 1 and 2 may be enacted.

### DETAILED DESCRIPTION

Video conferencing platforms increase work productivity and enable remote work for many different industries by supporting live communication for participants in different geographical locations. Participants located across the world or even in different rooms of the same building can join a live virtual meeting that shares video and audio transmissions of the participants. Video conferencing platforms can provide many different features and functionalities to boost productivity during and after the meeting. Examples of such features include screen sharing, recording capabilities, chat functions, automatic transcription, etc.

Transcription is a common feature of many video conferencing applications that provides a text summary of conversations/speech that occurred during a video conference. Utilizing voice recognition techniques, audio data from the video conference can be used to identify and transcribe spoken words into text. Such functionalities can be implemented in various ways, including through the use of voice recognition algorithms and machine learning models. Oftentimes, portions of the transcription are annotated or labeled with identifiers corresponding to respective speakers. This is typically implemented by attributing a given text portion to a name or username associated with the user account from which the corresponding audio originated.

When participants join a video conference individually from their devices, the system can track and attribute statements correctly. However, when multiple people attend from a single conference room, the system cannot differentiate between individual speakers, leading to generic attributions. For example, video conferences can often have two or more of the participants joining in from the same room using one account on the video conferencing platform. From the platform's point of view, the audio data originated from one source. Thus, the automatic transcription function would attribute speech from this source to the associated user account, even if the conversation involves multiple speakers. Slightly more sophisticated implementations can differentiate that there are different speakers but would still label their speech in a generic manner without useful identifiers. The inability to distinguish speech from multiple speakers can result in ambiguity and reduce the utility of meeting summaries, which can cause issues in the tracking of discussions and decisions in collaborative environments.

In view of the observations above, implementations of context-enhanced summarization and transcription for virtual meetings and video conferencing are provided. The techniques described herein leverage a combination of contextual cues and advanced technologies to assign speech to individual participants. In some implementations, a list of invitees is matched to different voice profiles recognized by a voice recognition system. The matching can be performed in various ways. For example, the matching can be performed based on various types of contextual information, including but not limited to profile images, spatial position information (e.g., within a meeting room), audio recognition, facial recognition, meeting titles, and conversational content. In some implementations, specialized hardware, such as directional microphones, is used to provide contextual information for the transcription process. Machine learning models trained on voice and facial data can also be employed to identify speakers accurately using contextual information. These and other elements can be utilized to provide a sophisticated system that accurately attributes spoken statements to specific individuals even when they are in the same physical room. In some implementations, the transcription process uses a stateless approach, which can provide greater privacy and security for users by leveraging only the data available within the session. Such implementations offer scalability and flexibility by performing all reasoning and processing within the meeting context.

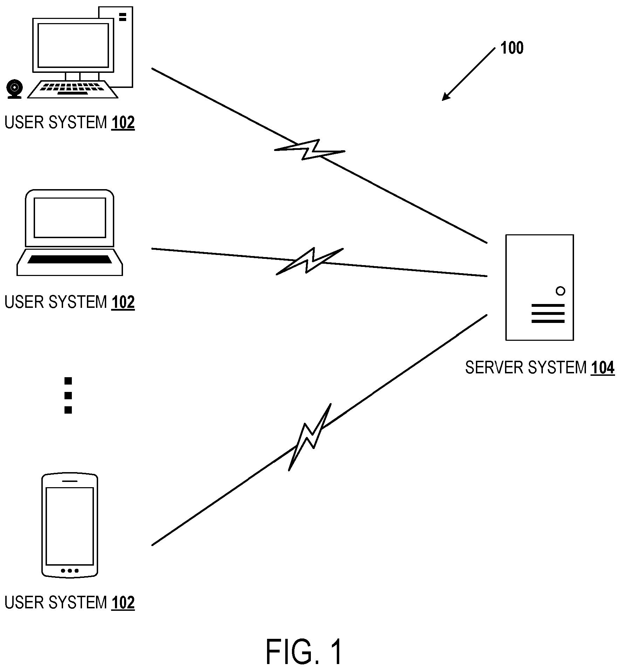

Turning now to the drawings, implementations of context-enhanced summarization and transcription for virtual meetings and video conferencing are depicted and described in further detail. FIG. 1 shows a schematic view of an example system 100 for conducting video conferences across multiple computing systems 102. Various types of user computing systems 102 can be utilized to conduct a video conference. Examples include but are not limited to desktop computing devices, laptop devices, and mobile devices. Conducting video conferences can be performed in various ways. In some implementations, the video conference is conducted through a peer-to-peer connection where a user device directly transmits video and audio data streams to another user device. In the depicted example, the video conference is performed using a central host server system 104 in communication with the user systems 102. Various types of communication networks can be utilized, including but not limited to the Internet, local area networks, wide area networks, etc.

Generally, video conferencing is performed through a video conferencing application on each of the user systems 102. During a video conference, each of the user systems 102 generates a video stream and/or an audio stream that is transmitted to the server system 104 through a communication network. The server system 104 then distributes these data streams to the other user systems 102, enabling each participant to see and hear other participants in a real-time virtual setting. After the video conference, a transcription process can be performed to transcribe audio data from the video conference into a transcript. In some implementations, the transcription process is performed in real-time during the video conference. Transcriptions processes described herein include techniques for using contextual information to provide accurately labeled transcripts.

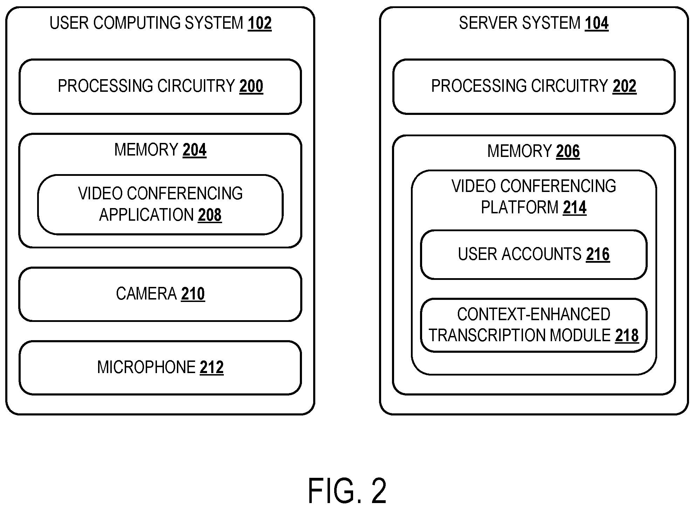

FIG. 2 shows a schematic view of an example user computing system 102 and an example server system 104 for context-enhanced meeting transcription. The user computing system 102 can be utilized to conduct one end of a video conference. The server system 104 can be utilized to perform a context-enhanced transcription process for a video conference that has been conducted (e.g., for video conferences conducted by the user computing system 102 or any other appropriate computing system). In other implementations, the context-enhanced transcription process is performed on a user computing system that conducts the video conference (e.g., user computing system 102).

In the depicted example, the user computing system 102 conducts video conferences using the server system 104 as a central host server that receives and distributes video and/or audio streams among various participants. Various types of devices can be utilized to conduct a video conference. Examples include but are not limited to desktop computing devices, laptop devices, and mobile devices. In the depicted example of FIG. 2, the user computing system 102 and the server system 104 each includes processing circuitry 200, 202 and memory 204, 206 storing instructions that, during execution, cause the processing circuitry 200, 202 to perform various processes, including those described herein. Each of the user computing system 102 and the server system 104 can be implemented with one or more of various types of computing devices. For example, the user computing system 102 can include a plurality of computing devices, and processing circuitry 200 and memory 202 may each include multiple components spread across multiple computing devices (e.g., processing circuitry 200 can include multiple processors within a single device or spread across multiple devices). The devices may be locally and/or remotely located. Each of the user computing system 102 and the server system 104 can also include non-depicted components for providing various functionalities, including components on individual computing devices.

The user computing system 102 includes a video conferencing application 208 for conducting/joining a video conference. The video conferencing application 208 can enable and coordinate various aspects of the video conference. For example, the video conferencing application 208 can access components of the user computing system 102 for generating video and/or audio streams and transmit them to the server system 104, which then distributes the data streams to other user computing systems partaking in the video conference. Various types of components can be utilized to capture video and record audio for video conferencing. In the depicted example, the user computing system 102 includes a camera 210 and a microphone 212 to capture/record video and audio streams, respectively. In some implementations, the user computing system 102 utilizes multiple cameras and/or multiple microphones. The camera 210 and/or microphone 212 can be implemented as external peripherals or as integrated components. For example, laptop and mobile devices often include integrated cameras. Desktop systems often lack integrated cameras and, as such, can utilize external cameras for video conferencing. Audio recording can also be provided through integrated and/or external components, such as integrated microphones, speakers, headsets, external microphones, directional microphones, etc.

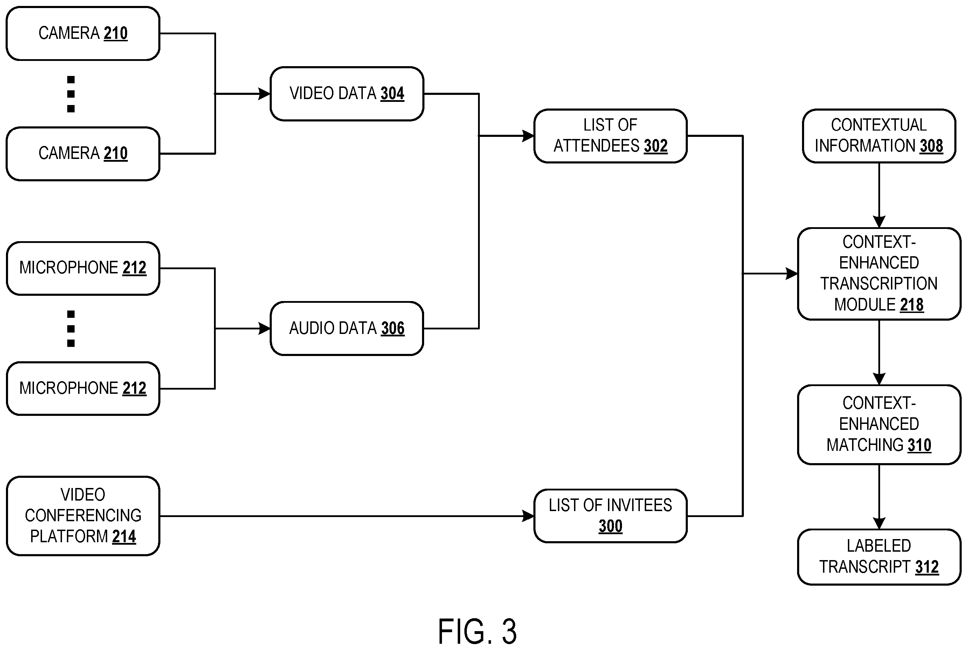

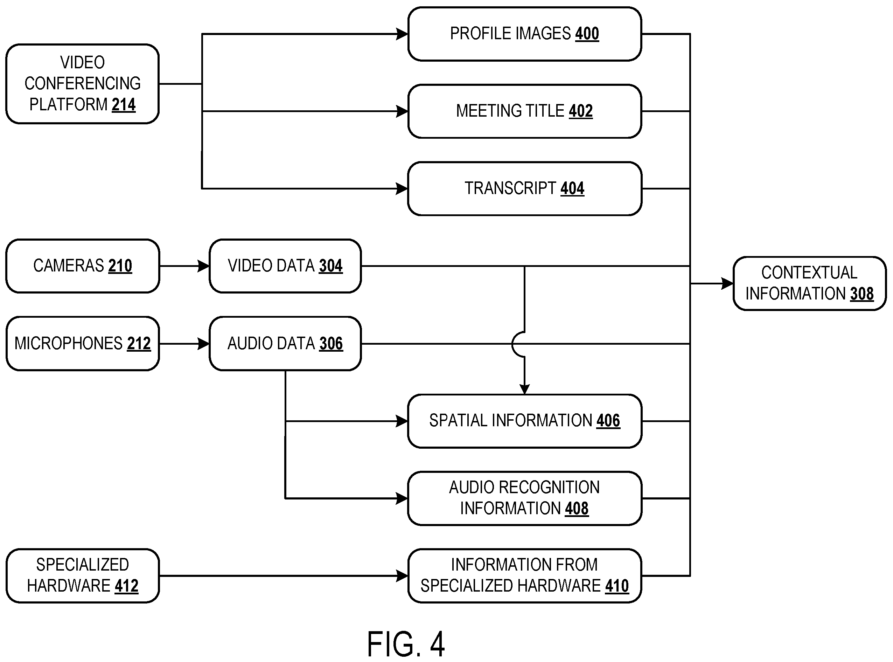

The video conferencing application 208 enables users access to a video conferencing platform 214 hosted on the server system 104. Generally, the video conferencing platform 214 provides users with the ability to create user accounts 216 with which they can schedule, host, and join video conferences. The video conferencing platform 214 also includes a context-enhanced transcription module 218 for performing context-enhanced transcription of video conferences to generate labeled transcripts. The context-enhanced transcription module 218 can be implemented to transcribe audio from a video conference using various types of contextual information to attribute transcribed text to the speakers. Different types of contextual information and how they can be utilized in context-enhanced transcription processes are described in further detail below with respect to FIGS. 3 and 4.

FIG. 3 shows a data flow diagram of an example method for context-enhanced meeting transcription by matching attendees to invitees. Context-enhanced meeting transcription processes can be implemented in various ways. In some implementations, the process includes retrieving a list of invitees 300 from a given video conference that is to be transcribed. An invitee is a person that was invited to the video conference and can be identified by name or username. The list of invitees 300 can be utilized as a pool of potential speakers. In the depicted example, the list of invitees 300 is retrieved from the video conferencing platform 214. Generally, video conferencing platforms enable the creation of user accounts that are linked to respective users. A user account may be used as an identifier of a respective user. For example, the user account may include a name or username of a respective user.

When a video conference is scheduled (e.g., using a video conferencing application), invitations can be sent to invited people, which can include users and/or non-users of the video conferencing platform 214. Accordingly, a list of invitees (e.g., a list of names and/or usernames of invitees) can be generated based on the invitations that were sent. In some implementations, the list of invitees 300 is limited to users of the video conferencing platform 214. In other implementations, the list of invitees 300 can include non-users of the video conferencing platform 214. For example, invitations to a video conference can be sent via e-mail to a non-user of the video conferencing platform 214. In such cases, their e-mail or name, if available, can be used as an identifier in the list of invitees 300. In some implementations, the list of invitees 300 includes all invited users and/or non-users. In other implementations, the list of invitees 300 exclude users and/or non-users that did not accept/confirm the invitations.

The transcription process also includes deriving a list of attendees 302, which can be used to match against the list of invitees 300. An attendee is a person that attended the video conference. The list of invitees 300 may be similar or different from the list of attendees 302. For example, an additional guest or a non-invited user may have attended the video conference. An invited user may also not have attended. In some implementations, the list of attendees 302 is limited to only users and/or user accounts on the video conferencing platform 214. In other implementations, the list of attendees 302 can include guests that attended the video conference. These guests may have a generic identifier in the list of attendees 302 (e.g., Unknown guest 1, Unknown guest 2, etc.). In some cases, context from the video conference can be used to predict a name of a guest. For example, a meeting title of the video conference can allude to a talk given by an individual that was not invited. Conversations during the video conference can also refer to a speaker by name.

The list of attendees 302 can be derived in various ways. Generally, using a list of user accounts that attended the video conference is insufficient since multiple participants or invitees often attend the video conference through a single account if they are in the same location (e.g., same meeting room). To provide a more robust list of attendees 302, video data 304 and audio data 306 can be used to determine and distinguish people that attended the video conference. In some implementations, face detection algorithms are utilized during the video conference to detect attendees. Each detected face can correspond to a different attendee. For example, video data 304 can be retrieved from a plurality of video streams from respective user computing systems that joined the video conference. Each video stream will likely contain one or more faces of the attendees. The combined information from all the video streams enables the process to determine and distinguish different faces for at least a subset of the attendees. However, use of video data 304 to determine the list of attendees 302 is not always dispositive. For example, an attendee might not turn on their camera 210. In a meeting room with multiple attendees, one or more attendees might not be in view of the camera. In some implementations, audio data 306 is used to distinguish different voices/attendees. Audio data 306 of the video conference can be analyzed to determine a number of different speakers. Each different voice can correspond to a different attendee. For example, audio recognition algorithms can be applied to determine different voice profiles. In some implementations, a combination of face detection information and audio recognition information is utilized to determine the list of attendees 302.

The list of invitees 300 and the list of attendees 302 can be passed to a context-enhanced transcription module 218 that attempts to perform a matching of attendees to invitees. By analyzing the video data 304 and audio data 306, the transcription process is able to determine when and what was spoken by an attendee. This can be performed in various ways. In some implementations, each frame of the video data 304 is processed to track a number of faces that appeared. Lip movement can also be tracked. For example, landmark detection can be performed to detect lip movement. In some implementations, the frequency of lip movement is detected, which can be used to determine whether the person is speaking or not. For example, a threshold can be applied to remove lip movements that are not associated with speaking (e.g., if the person is chewing gum). From the audio data 306, timing information of when speech is spoken can be derived.

An attendee matched with an invitee would provide an identifier to the attendee (e.g., name, username, etc.). This identifier can be used to label a transcript of the video conference, enabling accurate labeling of a transcript even when multiple participants joined the video conference from the same meeting room. Matching attendees to invitees can be performed in various ways. In some implementations, contextual cues from various sources are utilized to perform the matching. In the depicted example, the context-enhanced transcription module 218 utilizes contextual information 308 from various sources to perform a context-enhanced matching 310 of the list of attendees 302 to the list of invitees 300. The context-enhanced matching 310 provides identifiers (e.g., names) of the attendees, which can be used to generate a labeled transcript 312 with accurate labeling of speakers. Various types of contextual information 308 can be utilized to perform the context-enhanced matching 310. One example includes profile images associated with user accounts on the video conferencing platform 214. Generally, video conferencing platforms allow users to upload profile images to their user accounts. Profile images are usually representative of the users and can provide visual cues that can be matched to faces appearing in a camera stream. For example, users often set their profile images to portraits of themselves. Computer vision techniques can be implemented to determine faces that are speaking from the video data 304, which can then be matched to profile images/user accounts and, consequently, to invitees. The detected speech can then be attributed to the matched invitee at the given timestamp. Further examples of contextual information 308 are depicted and described with respect to FIG. 4.

FIG. 4 shows a data flow diagram of an example method for extracting features and contextual information for context-enhanced meeting transcription. As described above, one example of contextual information 308 includes profile images. Profile images 400 associated with invitees can be retrieved from the video conferencing platform 214 and used to match with faces that appear in the video data 304, which can include a camera stream of a meeting room containing multiple attendees. Oftentimes, the profile images 400 are face portraits of the users facing the camera. In some implementations, a three-dimensional face pose estimation algorithm is employed to identify instances of when faces are oriented towards the camera 210. These instances can then be used along with the profile images 400 for similarity matching calculations. Face similarity matching can be performed in various ways. In some implementations, deep learning-based methods are used for face similarity detection. For example, a neural network model can be employed to analyze facial features and patterns to determine similarity between two images. In some implementations, the matching is performed with a constraint that each face appearing on a camera stream can only be matched to one person or invitee. This provides increased accuracy of the similarity matching process.

Another example of contextual information 308 includes meeting titles 402. A meeting title 402 can be retrieved from the video conferencing platform 214. Oftentimes, a scheduled video conference includes a meeting title 402 that provides context about the meeting's purpose, participants, and/or subject matter. For example, the meeting title 402 can allude to a talk by a specific individual. Using such information as context, the transcription process can determine that speech after an opening introduction is likely attributed to the individual specified in the meeting title (i.e., the specified individual is giving a presentation). A higher confidence level can be achieved if the audio recognition recognizes a single speaker for a majority of the video conference time. In another example, the meeting title 402 can indicate that the subject matter of the video conference is to discuss project details with a specific team (e.g., marketing, sales, etc.). Such information can narrow down the list of potential speakers.

Another example of contextual information 308 includes the content of conversations during the video conference. Oftentimes, a conversation between the participants can provide useful context. For example, during a conversation among multiple participants, a participant may refer to a person by name. This can be especially useful if the participant refers to the person's name in the context of describing someone who just spoke or will speak (e.g., introducing a speaker that will be giving a presentation). Content of the conversations can be extracted from a transcript 404 of a video conference (e.g., unlabeled transcript) generated by the video conferencing platform 214. For example, after a video conference, the video conferencing platform 214 can take the audio data 306 and generate a transcript of speech that was spoken during the video conference. In some implementations, a large language model is utilized to extract context from the transcript 404. Details within the conversations, including those discussed above, can provide priors to help identify the speakers. An unlabeled transcript can be generated in various ways, such as by using a speech-to-text (STT) algorithm or any other appropriate natural language processing (NLP) algorithm. For example, the unlabeled transcript can be generated using a machine learning model applying a STT technique. Various types of machine learning models, including but not limited to generative pre-trained transformer models, can be utilized to identify speech from audio data 306.

The video data 304 and the audio data 306 provide a source of various types of contextual information 308 that can be extracted. One example includes spatial position information 406 that can be extracted from audio data 306 and/or video data 304. Spatial position information 406 describes spatial information of detected speech within the meeting room. For example, speakers that are farther away from the microphone can sound different from speakers that are closer. Although speakers typically do not move or change positions during a single video conference, it can be useful to identify and track the position of each speaker in the meeting room to help reduce artifacts, such as confusion between speakers in case they change their positions. Similarly, video data 304 can be used to track if speakers move out of view of the camera 210. Corroborating with speech detected from the audio data 306, such information can provide useful context in identifying a given speaker.

Another example of contextual information 308 includes audio recognition information 408. Such information can be extracted from the audio data 306. In some implementations, audio recognition algorithms are utilized to help distinguish between different voices. Audio recognition can also provide a strong prior on identifying the person by limiting the pool of potential speakers. In some implementations, audio of speakers can be matched with profile images to identify who is likely speaking by analyzing various traits and characteristics. For example, audio recognition algorithms can be used to identify certain traits or characteristics (e.g., pitch, tone, etc.) of a given voice. Such characteristics can be used as context to limit the pool of potential speakers (e.g., based on a gender and/or race identified using traits/characteristics of a given voice). Additionally or alternatively, speech patterns can be used to provide context about the speaker's age. Combining these audio features with visual cues from profile images (e.g., facial features, expressions, etc.) can provide enhanced accuracy in the identification of the speaker.

Another example of contextual information 308 includes information 410 provided by specialized hardware 412. In some implementations, the computing system that is utilized by the participants in the meeting room to join the video conference includes specialized hardware 412. Various types of specialized hardware 412 can be used to provide contextual information 308 for the matching process. For example, the computing system can include one or more directional microphones that can provide information for tracking spatial positions of one or more audio sources (e.g., speaking participants). Directional microphones can also advantageously capture high-quality audio, providing enhanced accuracy for matching voice profiles.

As described in the sections above, various types of contextual information 308 can be generated and/or extracted using different methodologies. In some implementations, multiple machine learning models are utilized for extracting contextual information 308. For example, a vision model can be utilized to process the profile images 400 and the video data 304. A language model can be utilized to process the content of the transcript 404 and the meeting title 402. In some implementations, a multi-modal model, such as a vision-language model, is implemented to process both image and text data to extract contextual information 308.

Matching voice profiles to invitees using contextual information 308 can be implemented in various ways. In some implementations, an algorithm for matching M invitees to N attendees. The matching process can be performed at the end of a video conference. In some implementations, the matching process is performed at regular intervals during the video conference, updating itself with new information as it becomes available. As described in the sections above, a list of attendees 302 can be derived using audio data 306 and/or video data 304 from the video conference. For example, the number of attendees *N* can be determined by running face detection algorithms over the full session to detect a count of different faces of attendees. In some implementations, *N* is obtained by determining the number of different voice profiles that were detected during the video conference.

The matching algorithm can be implemented to optimize a function involving terms that represent similarity (or dissimilarity) scores for various contextual metrics. For example, the matching algorithm can involve an optimization function that minimizes dissimilarity scores to determine a matching assignment of *M* invitees to *N* attendees. In other implementations, the matching algorithm attempts to maximize similarity scores of the various terms. This can depend on how the scores are calculated. For example, certain contextual metrics can be transformed into vector representations. Similarity between vector representations can be mathematically determined by calculating a distance between two vectors. In such cases, a lower score can represent a higher similarity. Accordingly, the matching algorithm can be implemented to minimize a function containing such terms.

In some implementations, the matching process optimizes the following optimization function: $L = min {\sum }_{i = 1}^{M} {\sum }_{j = 1}^{N} \left({f}_{ij}+{a}_{ij}+{c}_{ij}\right) {x}_{ij} ,$ where: *M* and *N* are the number of invitees and attendees, respectively; *fᵢⱼ* represents the dissimilarity score between the invitee's profile image *i* and the attendee's face *j. aᵢⱼ* is the dissimilarity score between invitee's profile image *i* and the attendee's voice *j; cᵢⱼ* is the dissimilarity score between invitee *i* and the context-driven prior for attendee *j;* and *xᵢⱼ* is a binary variable that is 1 if invitee *i* is matched to attendee *j,* and 0 otherwise, such that $N = {\sum }_{i = 1}^{M} {\sum }_{j = 1}^{N} {x}_{ij}$*.* The constraint on *xᵢⱼ* provides that each attendee is matched to one unique invitee. As can readily be appreciated, the optimization function can utilize any other contextual metric, additionally or alternatively. In some implementations, the optimization function includes weighted terms. For example, selected and/or calculated coefficients can be utilized. For example, users lacking a profile image may cause a term to disproportionally unbalance the function, making it difficult to obtain an accurate matching. In such cases, appropriate coefficients can be used.

Terms used for an optimization function can represent any type of contextual metric and can be calculated in various ways. In some implementations, vector representations are used to calculate dissimilarity scores. For example, the scoring for *fᵢⱼ* can be performed by calculating vector representations of the profile image of invitee *i* and the face of attendee *j*. A difference between the two vectors can be calculated to determine the dissimilarity score of *fᵢⱼ.* In some implementations, larger differences result in higher dissimilarity scores. In implementations where vectors are obtained using modern face embeddings *v*, cosine similarity can be leveraged such that *fᵢⱼ* = 1 - cosine_similarity(*vᵢ*, *vⱼ*). The modern face embeddings *v* are often designed to have small angles between same-person embeddings (high cosine similarity) and large angles between different people (low cosine similarity). Vector representations can be generated in various ways. In some implementations, the image data of the profile image and/or the face image from the video data 304 is converted into embeddings, which can then be translated into vector representations. In further implementations, a machine learning model is implemented to generate the vector representations.

Similar to the *fᵢⱼ* term, vector representations can also be used for the *aᵢⱼ* term where the profile image of invitee *i* and the voice of attendee *j* are compared. For example, contextual information about an attendee's voice can be extracted from the audio data 306. Information such as pitch, tone, speech patterns, etc. can be used to predict the attendee's age, gender, and/or race. This information can be compared to profile images of invitees to determine similarity (e.g., using vector representations).

The *cᵢⱼ* term describes the dissimilarity score between invitee *i* and the context-driven prior for attendee *j*. Context-driven priors can be derived in various ways. For example, meeting titles 402 and conversations of the video conference can be used as contextual information that provides context-driven priors. In some implementations, a large language model is implemented to parse information from a meeting title 402 and conversations to determine the context-driven prior for a given attendee. This can then be compared to the invitees to calculate the *cᵢⱼ* term. For example, names of the invitees can be compared to their occurrences/non-occurrence in the meeting title 402 and/or conversations.

In some implementations, the matching is performed within a stateless session. For example, the transcription process can be implemented to leverage only the data available within a given session (e.g., profile images, video streams, audio streams, transcript of the video conference, etc.). This can provide privacy and security for users as their data is not stored or used beyond the duration of the video conference. Such implementations can also quickly adapt to new participants and changing meeting conditions without additional data collection and/or training. By performing all reasoning and processing within the meeting context, the system is not limited to a fixed number of scenarios or specific sets of pre-trained data. Such systems can be implemented to be highly scalable and flexible, capable of being implemented across a wide range of meeting types and sizes.

In some implementations, the matching can be performed using previously collected/processed data. For example, voice profiles and/or voice samples can be stored for individual user accounts. Such information can be provided by the user or be derived after performing a context-enhanced transcription process (for use in future transcription processes). Upon recognition of a known voice profile, the system can match said voice profile to the corresponding user account. Using a list of invitees to create a pool of potential matches can further enhance the accuracy of such techniques.

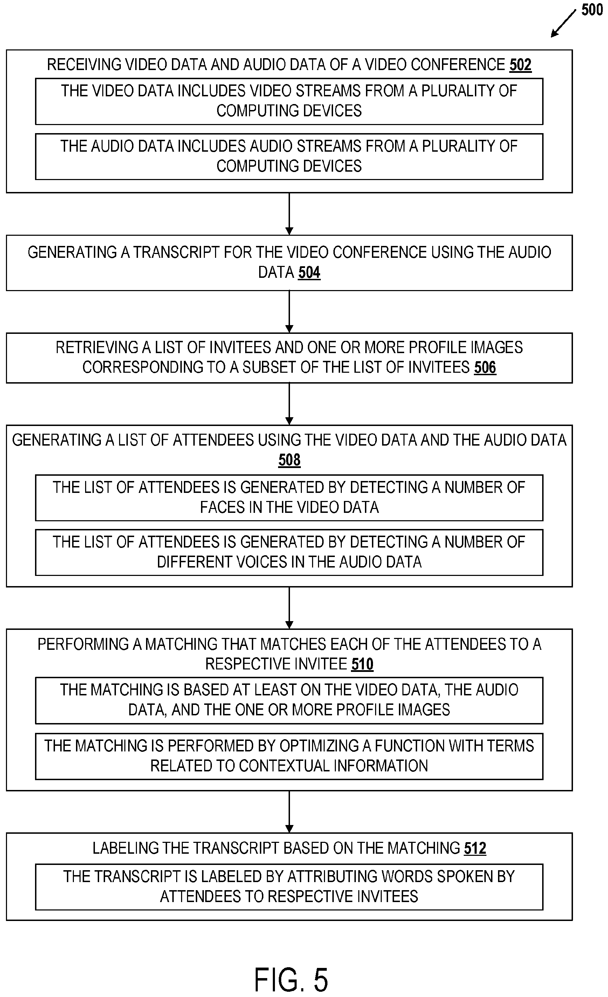

FIG. 5 shows a process flow diagram of an example method 500 for context-enhanced meeting transcription. At step 502, the example method 500 includes receiving video data and audio data of a video conference. The video data can include video streams from a plurality of computing devices that conducted the video conference. In some implementations, the video data includes a video stream of a meeting room containing two or more participants. Additionally or alternatively, the audio data can include audio streams from the plurality computing devices. In some implementations, the audio data includes information from one or more directional microphones.

At step 504, the example method 500 includes generating a transcript for the video conference using the audio data. The transcription can be performed in various ways. In some implementations, audio recognition algorithms, including but not limited to speech-to-text algorithms and other natural language processing algorithms, are applied on the audio data to transcribe it into text. The transcription can be performed after or during the video conference. This initial transcription can be unlabeled or labeled with generic identifiers. In some implementations, a machine learning model is implemented to generate the transcript. For example, a generative pre-trained transformer model can be implemented to generate the transcript.

At step 506, the example method 500 includes retrieving a list of invitees and one or more profile images corresponding to a subset of the invitees. The list of invitees can be utilized as a pool of potential speakers. The list of invitees can be provided in various ways. In some implementations, the list of invitees is retrieved from a video conferencing platform. For example, when a user schedules a video conference using a video conferencing application, invitations are sent to invited people. This list of invited people can be utilized as the list of invitees. In some implementations, the list of invitees includes only invited people that have accepted or confirmed the invitations. In some implementations, the list of invitees is limited to users of the video conferencing platform. In other implementations, the list of invitees can include non-users of the video conferencing platform. For example, an invitation to the video conference can be sent to the e-mail of an invited person that is not a user of the video conferencing platform. In such cases, the list of invitees can identify said person by the email address or name, if available.

At step 508, the example method 500 includes generating a list of attendees using the video data and the audio data. The list of attendees can be generated in various ways. In some implementations, the list of attendees is generated by detecting faces that appear in the video data. For example, each unique face that appeared in all of the video streams can be tracked, and each attendee would correspond with a unique face. Additionally or alternatively, the list of attendees can be generated by detecting unique voice profiles in the audio data. Each different voice profile can correspond to a different attendee. In some implementations, a combination of face detection and voice recognition is utilized to determine the list of attendees. Such implementations can account for detected faces that did not speak and/or speech by a person not in view of the cameras.

At step 510, the example method 500 includes performing a matching that matches each of the attendees to a respective invitee. The matching can be performed in various ways. In some implementations, the matching is performed in a stateless session that utilizes only information relating to the given video conference. In other implementations, the matching is performed using pre-computed and/or preprocessed information relating to invitees. For example, a voice sample or voice profile can be stored and associated with an invitee. Such information can be used as context for the matching. In some implementations, the matching is based at least on the video data, the audio data, and the one or more profile images. For example, the matching can be performed by detecting lip movements in the video data, corroborating the lip movements with speech in the audio data, and associating the speech with an invitee based on the one or more profile images and detected faces in the video data.

In some implementations, the matching is performed by optimizing a function with terms relating to contextual information. The terms can be based on dissimilarity or similarity scorings. For example, in some implementations, the optimization function attempts to optimize a first set of similarity scorings between the one or more profile images and one or more faces extracted from the video data, a second set of similarity scorings between the one or more profile images and one or more voice profiles extracted from the audio data, and a third set of similarity scorings between the invitees and context-driven priors. The optimization function can optimize for a minimum value or a maximum value. For example, in some implementations, the function includes terms describing a dissimilar scoring, where higher values correspond to higher dissimilarity. In such cases, the process can attempt to select a matching that minimizes the function.

Similarity (or dissimilarity) scorings can be generated in various ways. In some implementations, a similarity scoring is a mathematical difference between two vectors, wherein each vector represents a contextual aspect. For example, a vector can be generated using embeddings generated from a profile image. A second vector can be generated using embeddings generated from a frame of the video data. These two vectors can be compared to determine a similarity (or dissimilarity scoring). Similarly, vectors can be generated for voice profiles and/or context-driven priors. For example, a vector can be generated based on characteristics of a voice profile (e.g., tone, pitch, etc.), which can be compared to a vector corresponding to a profile image.

At step 512, the example method 500 includes labeling the transcript based on the matching. The transcript can be labeled in various ways. In some implementations, the transcript is labeled by attributing words spoken by attendees to respective matched invitees. The steps described above for example method 500 can be performed in a different ordering. For example, the transcript can be generated at any time before it is labeled. In some implementations, the transcript can be generated at any time before the matching is performed if the transcript is utilized as context for the matching.

In some embodiments, the methods and processes described herein may be tied to a computing system of one or more computing devices. In particular, such methods and processes may be implemented as a computer-application program or service, an application-programming interface (API), a library, and/or other computer-program product.

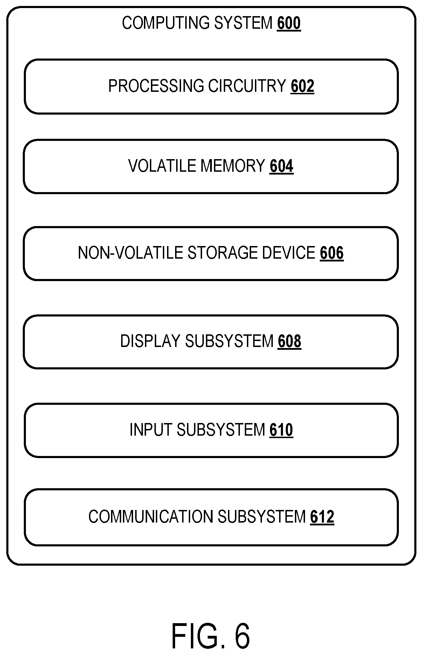

FIG. 6 schematically shows a non-limiting embodiment of a computing system 600 that can enact one or more of the methods and processes described above. Computing system 600 is shown in simplified form. Computing system 600 may embody one of the systems 102, 104 described above and illustrated in FIGS. 1 and 2. Components of computing system 600 may be included in one or more personal computers, server computers, tablet computers, home-entertainment computers, network computing devices, video game devices, mobile computing devices, mobile communication devices (e.g., smart phone), and/or other computing devices, and wearable computing devices such as smart wristwatches and head mounted augmented reality devices.

Computing system 600 includes processing circuitry 602, volatile memory 604, and a non-volatile storage device 606. Computing system 600 may optionally include a display subsystem 608, input subsystem 610, communication subsystem 612, and/or other components not shown in FIG. 6.

Processing circuitry 602 includes a logic processor that can be implemented with one or more physical devices configured to execute instructions. For example, the processing circuitry 602 may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The processing circuitry 602 may include one or more physical processors configured to execute software instructions. Additionally or alternatively, the processing circuitry 602 may include one or more hardware logic circuits or firmware devices configured to execute hardware-implemented logic or firmware instructions. Processors of the processing circuitry 602 may be single-core or multicore, and the instructions executed thereon may be configured for sequential, parallel, and/or distributed processing. Individual components of the processing circuitry 602 optionally may be distributed among two or more separate devices, which may be remotely located and/or configured for coordinated processing. Aspects of the processing circuitry 602 may be virtualized and executed by remotely accessible, networked computing devices configured in a cloud-computing configuration. In such a case, these virtualized aspects are run on different physical logic processors of various different machines, it will be understood.

Non-volatile storage device 606 includes one or more physical devices configured to hold instructions executable by the processing circuitry 602 to implement the methods and processes described herein. When such methods and processes are implemented, the state of non-volatile storage device 606 may be transformed-e.g., to hold different data.

Non-volatile storage device 606 may include physical devices that are removable and/or built in. Non-volatile storage device 606 may include optical memory, semiconductor memory, and/or magnetic memory, or other mass storage device technology. Non-volatile storage device 606 may include nonvolatile, dynamic, static, read/write, read-only, sequential-access, location-addressable, file-addressable, and/or content-addressable devices. It will be appreciated that non-volatile storage device 606 is configured to hold instructions even when power is cut to the non-volatile storage device 606.

Volatile memory 604 may include physical devices that include random access memory. Volatile memory 604 is typically utilized by processing circuitry 602 to temporarily store information during processing of software instructions. It will be appreciated that volatile memory 604 typically does not continue to store instructions when power is cut to the volatile memory 604.

Aspects of processing circuitry 602, volatile memory 604, and non-volatile storage device 606 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 600 typically implemented in software by a processor to perform a particular function using portions of volatile memory, which function involves transformative processing that specially configures the processor to perform the function. Thus, a module, program, or engine may be instantiated via processing circuitry 602 executing instructions held by non-volatile storage device 606, using portions of volatile memory 604. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 608 may be used to present a visual representation of data held by non-volatile storage device 606. The visual representation may take the form of a graphical user interface (GUI). As the herein described methods and processes change the data held by the non-volatile storage device, and thus transform the state of the non-volatile storage device, the state of display subsystem 608 may likewise be transformed to visually represent changes in the underlying data. Display subsystem 608 may include one or more display devices utilizing virtually any type of technology. Such display devices may be combined with processing circuitry 602, volatile memory 604, and/or non-volatile storage device 606 in a shared enclosure, or such display devices may be peripheral display devices.

When included, input subsystem 610 may comprise or interface with one or more user-input devices such as a keyboard, mouse, touch screen, camera, or microphone.

When included, communication subsystem 612 may be configured to communicatively couple various computing devices described herein with each other, and with other devices. Communication subsystem 612 may include wired and/or wireless communication devices compatible with one or more different communication protocols. As non-limiting examples, the communication subsystem may be configured for communication via a wired or wireless local- or wide-area network, broadband cellular network, etc. In some embodiments, the communication subsystem may allow computing system 600 to send and/or receive messages to and/or from other devices via a network such as the Internet.

The following paragraphs provide additional description of the subject matter of the present disclosure. One example includes a computing system for context-enhanced meeting transcription, the computing system comprising: processing circuitry and memory storing instructions that, during execution, cause the processing circuitry to: receive video data and audio data of a video conference; generate a transcript for the video conference using the audio data; retrieve a list of invitees for the video conference and one or more profile images corresponding to a subset of the list of invitees; generate a list of attendees using the video data and the audio data; generating a first set of similarity scorings by: detecting one or more faces in the video data; for each of the one or more faces, generating a face vector based on embeddings generated from the face; and for each of the one or more profile images: generating a profile image vector from embeddings generated from the profile image; and comparing the profile image vector with the one or more face vectors; perform a matching that matches each of the attendees to a respective invitee of the list of invitees based at least on the first set of similarity scorings; and label the transcript based on the matching. In this example, additionally or alternatively, labeling the transcript comprises attributing portions of text in the transcript to respective invitees from the list of invitees based on the matching. In this example, additionally or alternatively, the matching is performed further based at least on one or more of: a second set of similarity scorings between the one or more profile images and one or more voice profiles extracted from the audio data; or a third set of similarity scorings between the invitees and context-driven priors. In this example, additionally or alternatively, the matching is performed further based at least on: a second set of similarity scorings between the one or more profile images and one or more voice profiles extracted from the audio data; and a third set of similarity scorings between the invitees and context-driven priors. In this example, additionally or alternatively, wherein the context-driven priors are generated based on one or more of: content of the transcript; or a meeting title of the video conference. In this example, additionally or alternatively, the matching is performed by optimizing a function of the first set, the second set, and the third set of similarity scorings. In this example, additionally or alternatively, each of the similarity scorings of the first set, the second set, and the third set of similarity scorings describes a dissimilarity score such that a lower score describes a lower level of dissimilarity, and wherein optimizing the function comprises finding a minimum value matching. In this example, additionally or alternatively, the embeddings generated from the face and the embeddings generated from the profile image are generated using a multi-modal machine learning model. In this example, additionally or alternatively, the matching is performed in a stateless session. In this example, additionally or alternatively, the computing system further comprises one or more directional microphones, wherein the matching of each of the attendees is performed further based at least on information from the one or more directional microphones.

Another example includes a method for context-enhanced meeting transcription, the method comprising: receiving video data and audio data of a video conference; generating a transcript for the video conference using the audio data, wherein the transcript is generated using a speech-to-text algorithm; retrieving a list of invitees for the video conference and one or more profile images corresponding to a subset of the list of invitees; generating a list of attendees using the video data and the audio data; performing a matching that matches each of the attendees to a respective invitee of the list of invitees based at least on: the video data; the audio data; and the one or more profile images; and labeling the transcript based on the matching. In this example, additionally or alternatively, labeling the transcript comprises attributing portions of text in the transcript to respective invitees from the list of invitees based on the matching. In this example, additionally or alternatively, the matching is performed further based at least on one or more of: a first set of similarity scorings between the one or more profile images and one or more faces extracted from the video data; a second set of similarity scorings between the one or more profile images and one or more voice profiles extracted from the audio data; or a third set of similarity scorings between the invitees and context-driven priors. In this example, additionally or alternatively, the matching is performed further based at least on: a first set of similarity scorings between the one or more profile images and one or more faces extracted from the video data; a second set of similarity scorings between the one or more profile images and one or more voice profiles extracted from the audio data; and a third set of similarity scorings between the invitees and context-driven priors. In this example, additionally or alternatively, the first set of similarity scorings is generated by: for each of the one or more faces, generating a face vector based on embeddings generated from the face; and for each of the one or more profile images: generating a profile image vector from embeddings generated from the profile image; and comparing the profile image vector with the one or more face vectors. In this example, additionally or alternatively, the context-driven priors are generated based on one or more of: content of the transcript; or a meeting title of the video conference. In this example, additionally or alternatively, the matching is performed by optimizing a function of the first set, the second set, and the third set of similarity scorings. In this example, additionally or alternatively, the speech-to-text algorithm comprises a natural language processing model. In this example, additionally or alternatively, the matching is performed in a stateless session.

Another example includes a method for context-enhanced meeting transcription, the method comprising: receiving video data and audio data of a video conference; generating a transcript for the video conference using the audio data; retrieving a list of invitees for the video conference and one or more profile images corresponding to a subset of the list of invitees; generating a list of attendees using the video data and the audio data; performing a matching that matches each of the attendees to a respective invitee of the list of invitees based on an optimization function that finds a minimum-value matching for a plurality of dissimilarity scoring terms, wherein the plurality of dissimilarity scoring terms comprises: a dissimilarity score between the one or more profile images and one or more faces extracted from the video data; a dissimilarity score between the one or more profile images and one or more voice profiles extracted from the audio data; and a dissimilarity score between the invitees and context-driven priors; and labeling the transcript based on the matching.

"And/or" as used herein is defined as the inclusive or V, as specified by the following truth table:

| A | B | AVB |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computing system (104) for context-enhanced meeting transcription, the computing system (104) comprising:
processing circuitry (202) and memory (206) storing instructions that, during execution, cause the processing circuitry (202) to:
receive video data (304) and audio data (306) of a video conference;
generate a transcript (404) for the video conference using the audio data (306);
retrieve a list of invitees (300) for the video conference and one or more profile images (400) corresponding to a subset of the list of invitees (300);
generate a list of attendees (302) using the video data (304) and the audio data (306);
generating a first set of similarity scorings by:
detecting one or more faces in the video data (304);
for each of the one or more faces, generating a face vector based on embeddings generated from the face; and
for each of the one or more profile images (400):
generating a profile image vector from embeddings generated from the profile image (400); and
comparing the profile image vector with the one or more face vectors;
perform a matching (310) that matches each of the attendees (302) to a respective invitee of the list of invitees (300) based at least on the first set of similarity scorings; and
label the transcript (404) based on the matching (310).

2. The computing system of claim 1, wherein labeling the transcript comprises attributing portions of text in the transcript to respective invitees from the list of invitees based on the matching.

3. The computing system of claim 1, wherein the matching is performed further based at least on one or more of:
a second set of similarity scorings between the one or more profile images and one or more voice profiles extracted from the audio data; or
a third set of similarity scorings between the invitees and context-driven priors.

4. The computing system of claim 1, wherein the matching is performed further based at least on:
a second set of similarity scorings between the one or more profile images and one or more voice profiles extracted from the audio data; and
a third set of similarity scorings between the invitees and context-driven priors.

5. The computing system of claim 4, wherein the context-driven priors are generated based on one or more of:
content of the transcript; or
a meeting title of the video conference.

6. The computing system of claim 4, wherein the matching is performed by optimizing a function of the first set, the second set, and the third set of similarity scorings.

7. The computing system of claim 6, wherein each of the similarity scorings of the first set, the second set, and the third set of similarity scorings describes a dissimilarity score such that a lower score describes a lower level of dissimilarity, and wherein optimizing the function comprises finding a minimum value matching.

8. The computing system of claim 1, wherein the embeddings generated from the face and the embeddings generated from the profile image are generated using a multi-modal machine learning model.

9. The computing system of claim 1, wherein the matching is performed in a stateless session.

10. The computing system of claim 1, further comprising one or more directional microphones, wherein the matching of each of the attendees is performed further based at least on information from the one or more directional microphones.

11. A method (500) for context-enhanced meeting transcription, the method (500) comprising:
receiving (502) video data (304) and audio data (306) of a video conference;
generating (504) a transcript (404) for the video conference using the audio data (306), wherein the transcript (404) is generated using a speech-to-text algorithm;
retrieving (506) a list of invitees (300) for the video conference and one or more profile images (400) corresponding to a subset of the list of invitees (300);
generating (508) a list of attendees (302) using the video data (304) and the audio data (306);
performing (510) a matching (310) that matches each of the attendees (302) to a respective invitee of the list of invitees (300) based at least on:
the video data (304);
the audio data (306); and
the one or more profile images (400); and
labeling (512) the transcript (404) based on the matching (310).

12. The method of claim 11, wherein labeling the transcript comprises attributing portions of text in the transcript to respective invitees from the list of invitees based on the matching.

13. The method of claim 11, wherein the matching is performed further based at least on one or more of:
a first set of similarity scorings between the one or more profile images and one or more faces extracted from the video data;
a second set of similarity scorings between the one or more profile images and one or more voice profiles extracted from the audio data; or
a third set of similarity scorings between the invitees and context-driven priors.

14. The method of claim 11, wherein the matching is performed further based at least on:
a first set of similarity scorings between the one or more profile images and one or more faces extracted from the video data;
a second set of similarity scorings between the one or more profile images and one or more voice profiles extracted from the audio data; and
a third set of similarity scorings between the invitees and context-driven priors.

15. The method of claim 14, wherein the first set of similarity scorings is generated by:
for each of the one or more faces, generating a face vector based on embeddings generated from the face; and
for each of the one or more profile images:
generating a profile image vector from embeddings generated from the profile image; and
comparing the profile image vector with the one or more face vectors.
